# EUROPEAN PATENT SPECIFICATION

(11) **EP 2 153 482 B1**
(45) Date of publication and mention of the grant of the patent: **25.04.2012**
(21) Application number: 08750952.7
(22) Date of filing: 15.05.2008
(51) Int. Cl.: H01M 4/86, H01M 4/90, H01M 8/08, B01J 23/74, B01J 23/75

(54) **ELECTRODE CATALYST FOR ALKALINE FUEL CELL, ALKALINE FUEL CELL, AND FORMATION METHOD FOR ALKALINE FUEL CELL ELECTRODE CATALYST**
ELEKTRODENKATALYSATOR FÜR ALKALISCHE BRENNSTOFFZELLE, ALKALISCHE BRENNSTOFFZELLE UND VERFAHREN ZUR HERSTELLUNG EINES ELEKTRODENKATALYSATORS FÜR EINE ALKALISCHE BRENNSTOFFZELLE
CATALYSEUR POUR ÉLECTRODE DE PILE À COMBUSTIBLE ALCALINE, ET PROCÉDÉ DE FABRICATION DUDIT CATALYSEUR

(30) Priority: 18.05.2007 JP 2007133002
(43) Date of publication of application: 17.02.2010
(73) Proprietor: Toyota Jidosha Kabushiki Kaisha, Toyota-shi, Aichi-ken 471-8571 (JP)
(72) Inventor: NAKANISHI, Haruyuki, Toyota-shi Aichi-ken 471-8571 (JP); KUZUSHIMA, Yusuke, Toyota-shi Aichi-ken 471-8571 (JP)
(74) Representative: TBK
(86) International application number: PCT/IB2008/001211
(87) International publication number: WO 2008/142515

(56) References cited:
- WO-A-01/28025
- WO-A-96/41391
- WO-A-2004/052547
- WO-A-2006/019992
- WO-A-2006/099593
- US-A- 3 811 952
- US-A- 4 541 925
- US-B1- 6 355 166

## Description

### BACKGROUND OF THE INVENTION

### 1. Field of the Invention

This invention relates to an electrode catalyst of an alkaline fuel cell and a fuel cell that employs the electrode catalyst as well as a formation method for the alkaline fuel cell electrode catalyst.

### 2. Description of the Related Art

Presently, there are various types of fuel cells, for example, the alkaline type, the phosphoric acid type, the molten carbonate type, the solid electrolyte type, the solid polymer type, etc. As reactant gases used in these fuel cells, for example, pure hydrogen is supplied to the fuel electrode, and atmospheric air is supplied to the oxygen electrode. In some cases, instead of pure hydrogen, a reformed gas obtained by reforming a gas whose main component is hydrogen, such as methane, methanol, etc.

For example, Japanese Patent No. 3360485 discloses a fuel electrode of a fuel cell that uses a reformed gas of methane or methanol. In the fuel cell of Japanese Patent No. 3360485, the fuel electrode is constructed of a fuel electrode catalyst inner layer provided in contact with an electrolyte membrane, a porous base material provided on an outer side of the fuel electrode inner layer, and a fuel electrode catalyst outer layer provided on the outer side of the porous base material. A platinum catalyst is used in the fuel electrode catalyst inner layer and the fuel electrode catalyst outer layer.

When the fuel electrode of the fuel cell is supplied with a fuel, CO contained in the fuel is adsorbed and retained to catalyst particles in the fuel electrode catalyst outer layer. Besides, mainly due to the action of the catalyst particles in the fuel electrode catalyst outer layer, hydrogen in the fuel is separated into protons and electrodes, the electrons are received again on other catalyst particles so as to form a hydrogen gas. The hydrogen gas produced in the fuel electrode catalyst outer layer in this manner passes through the porous base material to reach the fuel electrode catalyst inner layer, in which the hydrogen gas is separated again into electrons and protons. Then, the protons pass through the electrolyte membrane to reach the oxygen electrode.

That is, in the fuel electrode of Japanese Patent No. 3360485, pure hydrogen is produced in the fuel electrode catalyst outer layer, and CO or the like also produced at the same time directly becomes adsorbed in the fuel electrode catalyst outer layer. Therefore, only pure hydrogen moves into the porous base material so that the interior of the porous base material is filled with pure hydrogen. As a result, only the pure hydrogen diffuses in the fuel electrode catalyst inner layer, so that the adverse effects of CO on the fuel electrode catalyst inner layer are restrained.

In the cathode electrode of the alkaline fuel cell, the oxygen reduction reaction is faster and the overvoltage is lower than in the cathode electrode of the solid polymer fuel cell. However, because the reaction at the cathode electrode side affects the reaction at the anode electrode side, it is preferable to further improve the oxygen reduction reaction. In this respect, Japanese Patent No. 3360485, while providing a fuel electrode that restrains the adverse effect of CO in the case where methane or methanol is used as a fuel, does not contribute at all to heightening a catalyst function of the cathode electrode.

### SUMMARY OF THE INVENTION

This invention provides an electrode catalyst for an alkaline fuel cell which is improved so as to heighten the catalyst function of the cathode electrode, and an alkaline fuel cell that employs the electrode catalyst as well as a formation method for the alkaline fuel cell electrode catalyst.

An alkaline fuel cell in accordance with a first aspect of the invention is defined in claim 1.

In the alkaline fuel cell in accordance with the first aspect, the magnetic material may be an oxide of an alloy.

In the alkaline fuel cell in accordance with the first aspect, the magnetic material may be an oxide of metal that contains iron.

In the alkaline fuel cell in accordance with the first aspect, the magnetic material may be an oxide of metal that contains iron and cobalt.

In the alkaline fuel cell in accordance with the first aspect, a mixture ratio of cobalt to a total amount of iron and cobalt in the oxide of metal may be substantially in a range of 5 to 30%.

In the alkaline fuel cell in accordance with the first aspect, the magnetic material has a narrow long needle-like shape having an aspect ratio in a range of 10 to 100.

In the alkaline fuel cell in accordance with the first aspect, the magnetic material may be disposed toward the electrode so that a length direction of the magnetic material is perpendicular to the contact surface between an electrolyte membrane and an electrode.

In the alkaline fuel cell in accordance with the first aspect, the catalyst particles may be particles made up of at least one metal selected from a group consisting of iron, cobalt, nickel and platinum.

In the alkaline fuel cell in accordance with the first aspect, the catalyst particles may be particles made up of iron, cobalt and nickel.

In the alalkaline fuel cell in accordance with the first aspect, the catalyst particles may be particles made up of nickel.

An alkaline fuel cell in accordance with a second aspect of the invention is defined in claim 7.

In the alkaline fuel cell in accordance with the second aspect, the anode electrode may have the electrode catalyst according to in accordance with the first aspect.

A formation method for an alkaline fuel cell in accordance with a third aspect of the invention is defined in claim 9 and includes: attaching an ion of a catalyst metal component to a metal oxide by immersing the metal oxide in a solution containing the ion of the catalyst metal component; separating the metal oxide from the solution; heating the metal oxide; and magnetizing the metal oxide after supporting the catalyst metal component on the metal oxide.

Another formation method for an alkaline fuel cell comprising an electrode catalyst in accordance with the third aspect includes: pulverizing alloy oxide; mixing the pulverized alloy oxide with a solution containing an ion of a catalyst metal component; heating a mixture of the solution and the pulverized alloy oxide; separating the metal oxide from the mixture of the solution and the pulverized alloy oxide; heating the metal oxide; and magnetizing the metal oxide after supporting the catalyst metal component on the metal oxide.

In the formation method for the alkaline fuel cell in accordance with the third aspect, the metal oxide may contain iron.

In the formation method for the alkaline fuel cell in accordance with the third aspect, the metal oxide may contain iron and cobalt.

In the formation method for the alkaline fuel cell in accordance with the third aspect, the magnetic material may have a narrow long needle-like shape having an aspect ratio in a range of 10 to 100.

In the formation method for the alkaline fuel cell in accordance with the third aspect, the catalyst particles may be particles made up of at least one metal selected from a group consisting of iron, cobalt, nickel and platinum.

In the formation method for the alkaline fuel cell in accordance with the third aspect, the catalyst particles may be particles made up of iron, cobalt and nickel.

In the formation method for the alkaline fuel cell in accordance with the third aspect, the solution containing the ion of the catalyst metal component may be obtained by mixing a solution of iron, a solution of cobalt and a solution of nickel whose concentrations are substantially equal.

In the formation method for the alkaline fuel cell in accordance with the third aspect, the metal oxide may be magnetized in a gradient magnetic field of at least 0.01 [T] or greater.

In the formation method for the alkaline fuel cell in accordance with the third aspect, the metal oxide may be magnetized in a gradient magnetic field of at least 0.05 [T] or greater.

According to the first aspect, the alkaline fuel cell is constructed so that the catalyst particles are supported on the magnetic material. Having the magnetism in this manner, the electrode catalyst may attract oxygen in a supplied reactant gas. Therefore, the catalyst function of the electrode catalyst may be heightened.

In the second aspect, in the case where the electrode catalyst in accordance with the first aspect is used as an electrode catalyst in the cathode electrode side in a fuel cell, the reaction rate of oxygen at the cathode electrode in particular is raised, so that a fuel cell of even higher power generation performance may be obtained.

In the third aspect, in the case where an electrode catalyst for an alkaline fuel cell is formed by magnetizing a metal oxide after supporting catalyst particles on the metal oxide, an electrode catalyst whose catalyst function has been heightened by magnetizing the metal oxide may be obtained.

### BRIEF DESCRIPTION OF THE DRAWINGS

The foregoing and/or further objects, features and advantages of the invention will become more apparent from the following description of preferred embodiment with reference to the accompanying drawings, in which like numerals are used to represent like elements and wherein:
FIG. 1 is a schematic diagram for describing a fuel cell in the first embodiment of the invention;
FIG. 2 is a diagram for describing an electrode catalyst of the fuel cell in the first embodiment of the invention;
FIG 3 is a diagram for describing manufacture steps of the electrode catalyst of the fuel cell of the first embodiment of the invention;
FIG 4 is a diagram for describing relationships between the current density and the voltage of a fuel cell of the first embodiment of the invention and a fuel cell of a comparative example;
FIG 5 is a diagram for describing relationships between the current density and the voltage of another example of the fuel cell of the first embodiment of the invention and a fuel cell of a comparative example;
FIG 6 is a diagram for describing manufacture steps for an electrode catalyst of a fuel cell in the second embodiment of the invention; and
FIG 7 is a diagram for describing a relationship between the current density and the voltage of a fuel cell of the second embodiment of the invention.

### DETAILED DESCRIPTION OF EMBODIMENTS

Hereinafter, embodiments of the invention will be described with reference to the drawings. In addition, the same or corresponding portions are assigned with the same reference numerals, and the description thereof will be simplified or omitted.

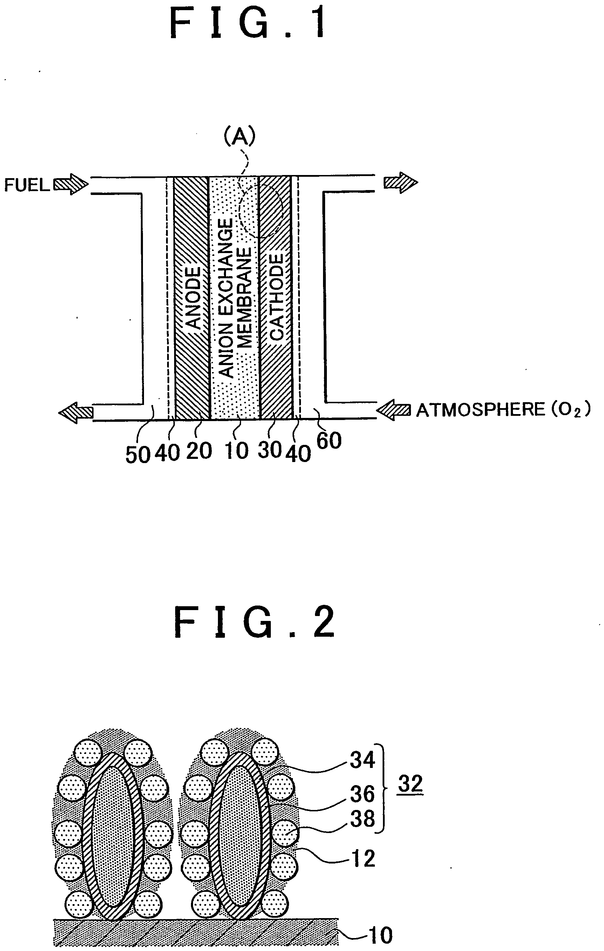

FIG. 1 is a drawing for describing a construction of a fuel cell of the first embodiment of the invention. The fuel cell shown in FIG 1 is an alkaline fuel cell. The fuel cell has an anion exchange membrane 10 (electrolyte). On two opposite sides of the anion exchange membrane 10, an anode electrode 20 and a cathode electrode 30 are disposed. A current collecting plate 40 is disposed on an outer side of each of the anode electrode 20 and the cathode electrode 30. A fuel path 50 is connected to the current collecting plate 40 on the anode electrode 20 side, and a fuel supply sauce (not shown) is connected to the fuel path 50. A fuel is supplied from the fuel supply source to the anode electrode 20 via the fuel path 50 and the current collecting plate 40, so that unreacted fuel or the like is discharged from the anode electrode 20. On the other hand, an oxygen path 60 is connected to the cathode electrode 30-side current collecting plate 40. Via the oxygen path 60 and the current collecting plate 40, atmospheric air is supplied to the cathode electrode 30, so that an atmospheric air off-gas that contains unreacted oxygen is discharged from the cathode electrode 30.

At the time of power generation of the fuel cell, the anode electrode 20 is supplied with a fuel that contains hydrogen, for example, ethanol or the like. On the other hand, the cathode electrode 30 is supplied with the atmospheric air (or oxygen). As the fuel is supplied to the anode electrode 20, the function of the electrode catalyst layer of the anode electrode 20 causes reaction of hydrogen atoms in the fuel and hydroxide ions that pass through the anion exchange membrane 10 from the cathode electrode 30 side to the anode electrode 20 side, so that water is produced and electrons are released. The reaction at the anode electrode 20 proceeds as in the following equation (1) in the case where the fuel is pure hydrogen or the following equation (2) in the case where the fuel is ethanol.

H₂+2OH⁻→2H₂O+2e⁻ (1)

CH₃CH₂OH+12OH⁻→2CO₂+9H₂O+12e⁻ (2)

On the other hand, as the atmospheric air is supplied to the cathode electrode 30, the oxygen molecules in the atmospheric air receive electrons from the cathode electrode 30 to produce hydroxide ions through several stages due to the function of the electrode catalyst of the cathode electrode 30 described below. The hydroxide ions move to the anode electrode 20 side through the anion exchange membrane 10. The reaction at the cathode electrode 30 proceeds as in the following equation (3):

1/2O₂+H₂O+2e⁻→20H⁻ (3)

The combination of the reactions at the anode electrode 20 side and the cathode electrode 30 side described above shows that the water-producing reaction represented by the following equation (4) occurs in the fuel cell as a whole, and the electrons involved in the reaction move via the current collecting plates 40 on the two electrode sides. Therefore, current flows, which means that power generation occurs.

H₂+1/2O₂→H₂O (4)

In the alkaline-type fuel cell as described above, the anion exchange membrane 10 is not particularly limited as long as it is a medium capable of moving the hydroxide ions (OH⁻) produced by the electrode catalyst of the cathode electrode 30 to the anode electrode 20. Concretely, examples of the anion exchange membrane 10 include solid polymer membranes (anion exchange resin) that have anion exchange groups such as primary to tertiary amino groups, quaternary ammonium groups, pyridyl groups, imidazole groups, quaternary pyridium groups, quaternary imidazolium groups, etc. Besides, examples of the solid polymer membrane include membranes of hydrocarbon-based resins, fluorine-based resins, etc.

The anode electrode 20 has at least an anode electrode catalyst layer. The fuel having passed through the current collecting plate 40 is supplied to the entire surface of the anode electrode catalyst layer. The catalyst layer of the anode electrode 20 has the catalyst function of extracting hydrogen atoms from the supplied fuel and causing the hydrogen atoms to react with hydroxide ions having passed through the anion exchange membrane 10 so as to produce water (H₂O) and, at the same time, release electrons (e⁻) to the current collecting plate 40. In the fuel cell shown in FIG. 1, the anode electrode 20 has a catalyst layer that is the same as the catalyst layer of the cathode electrode 30 described below.

FIG. 2 is an enlarged view of a portion of the cathode electrode 30 enclosed by a dotted line (A) in FIG. 1. As shown in FIG. 2, the cathode electrode 30 has at least a catalyst layer 32 (electrode catalyst). The atmospheric air supplied via the oxygen path 60 passes through the current collecting plate 40 and is supplied to the entire surface of the cathode electrode catalyst layer 32. The cathode electrode catalyst layer 32 has a function of receiving electrons (e⁻) from the current collecting plate 40 and producing hydroxide ions (OH⁻) from oxygen (O₂) and water (H₂O).

In order to improve the power generation performance of the fuel cell, it is important that the decomposition of the fuel at the anode electrode 20 as in the equation (1) or the equation (2) and the production of hydroxide ions (OH⁻) from oxygen at the cathode electrode 30 as in the equation (3) proceed efficiently. Therefore, it is important to cause a large amount of oxygen to reach the cathode electrode catalyst layer 32. In the related-art fuel cell, the movement of oxygen in the atmospheric air supplied to the cathode electrode 30 to the catalyst layer 32 depends on the concentration diffusion or the like. However, since the oxygen partial pressure in the atmosphere is low, the rate of oxygen reaching the catalyst layer 32 is slow. This means that the rate of the oxygen reduction reaction from oxygen to hydroxide ions shown in the equation (3) is slow, and the overvoltage becomes large.

In contrast, the fuel cell of the first embodiment adopts the cathode electrode catalyst layer 32 described below so that more oxygen from the atmospheric air may be attracted to the cathode electrode catalyst layer 32 and more hydroxide ions may be efficiently produced.

The cathode electrode catalyst layer 32 shown in FIG. 2 is formed by applying catalyst-supported units in each which catalyst particles are supported on carriers are applied to the anion exchange membrane 10 with an electrolyte solution 12 obtained by dissolving substantially the same components as those of the anion exchange membrane 10. Concretely, the carrier (magnetic material/metal oxide) on which catalysts are supported is formed by an alloy oxide 34. The alloy oxide 34 is an oxide of an alloy whose main component is an iron oxide. Besides, the shape of the alloy oxide 34 is a narrow elongated needle shape. Concretely, the aspect ratio of the alloy oxide 34 is in the range of 10 to 100. Furthermore, the alloy oxide 34 is a magnetic material having magnetism which has been magnetized in a magnetic field of 0.05 [T] or greater as a gradient magnetic field [dH/dx].

The outer surface of the alloy oxide 34 is coated with a carbon coat 36. The alloy oxide 34 coated with the carbon coat 36 supports many catalyst particles 38 fixed thereto. The catalyst particles 38 are composed of Ni (nickel).

The thus-constructed catalyst-supported units are disposed so that the direction of length of the alloy oxide 34 is perpendicular to the contact surface between the anion exchange membrane 40 and the cathode electrode 30. It is to be noted herein that the carriers have magnetism. Therefore, due to the magnetism of the catalyst-supported units, the catalyst-supported units may be regularly arranged so that the length direction thereof is perpendicular to the anion exchange membrane 10 when the solution of the catalyst-supported units in the electrolyte solution 12 is applied to the anion exchange membrane 10.

Incidentally, oxygen has magnetic moment, and has a relatively strong tendency to be magnetically attracted. Therefore, since the alloy oxide 34 in the cathode electrode catalyst layer 32 has magnetism, oxygen in the atmospheric air is attracted by the magnetic force. Therefore, oxygen may be attracted and moved efficiently to the surfaces of catalyst particles 38. The oxygen having reached the catalyst particles 38 adsorbs to the surfaces of the catalyst particles 38, and is decomposed to produce hydroxide ions as in the foregoing equation (3). Therefore, due to the use of the catalyst layer 32 in which the catalyst carriers are formed of a magnetic material, a greater amount of oxygen may be attracted to the catalyst particles 38, so that the production of hydroxide ions will be accelerated and the power generation performance will be improved, even in the case where, for example, a low-current density region lacks oxygen.

On the other hand, the hydroxide ions thus produced do not have a tendency to be magnetically attracted. Therefore, when hydroxide ions are produced from oxygen, the hydroxide ions easily leave the cathode electrode catalyst layer 32 and move into the anion exchange membrane 10.

Besides, the catalyst-supported units are formed in a needle shape, and are disposed so that the catalyst-supported units are protruded in the length direction thereof from the anion exchange membrane 10. Therefore, as a whole, the area of the reaction surfaces (three-layer interfaces) in the cathode electrode catalyst layer 32 may be increased. This will further raise the oxygen reduction reaction rate in the cathode electrode catalyst layer 32, and therefore will heighten the power generation performance.

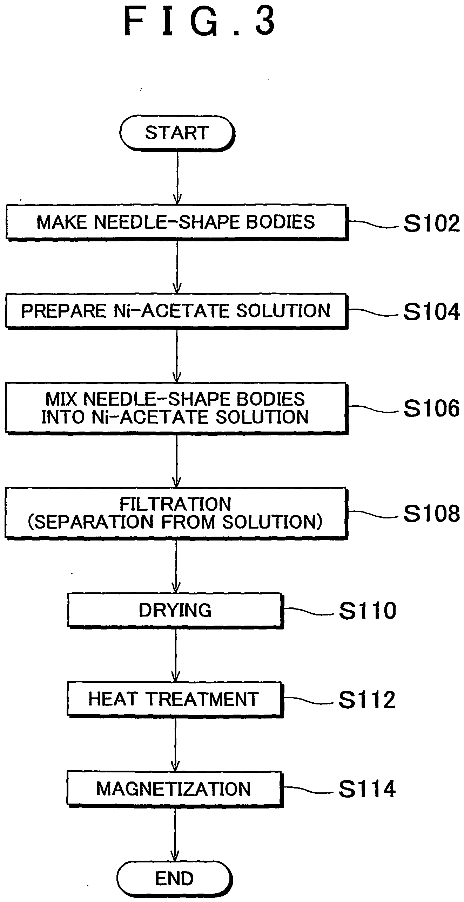

FIG. 3 is a diagram for describing processes of forming the cathode electrode catalyst layer 32 in the first embodiment of the invention. As shown in FIG. 3, to form the cathode electrode catalyst layer 32, needle-shape bodies of an alloy oxide 34 whose main component is iron are made, and are coated with the carbon coat 36 (S102). The making of the alloy oxide 34 and the coating thereof may be accomplished by known methods, and detailed descriptions thereof are omitted herein.

Next, a Ni-acetate solution is prepared (S104). The concentration of the Ni-acetate solution herein is approximately in the range of 0.005 [mol/l] to 10 [mol/l]. The needle-shape bodies made in step S102 are mixed into the prepared Ni-acetate solution (S 106). The amount of the needle-shape bodies for 1 [L] of the Ni-acetate solution is in the range of 5 [g] to 100 [g]. In this step, a state in which Ni ions are adsorbed to the needle-shape bodies is obtained.

After that, filtration is performed to obtain the alloy oxide from the solution (S108). The filtered alloy oxide is dried (S110). After that, a heat treatment is performed at 300 to 400 [°C] in an inert atmosphere (S112). This results in a state in which Ni is fixed and supported on the carrier (needle-shape bodies).

Next, magnetization is performed (S114). In this step, the alloy oxide 34 is magnetized in a gradient magnetic field [dH/dx] of 0.05 [T] or greater. The catalyst-supported units formed so that the alloy oxide 34 has magnetism are mixed with the solution 12 containing the same components as the anion exchange membrane 10, and the mixture is applied to the surface of the anion exchange membrane 10. As a result, the cathode electrode catalyst layer 32 is formed on the surface of the anion exchange membrane 10.

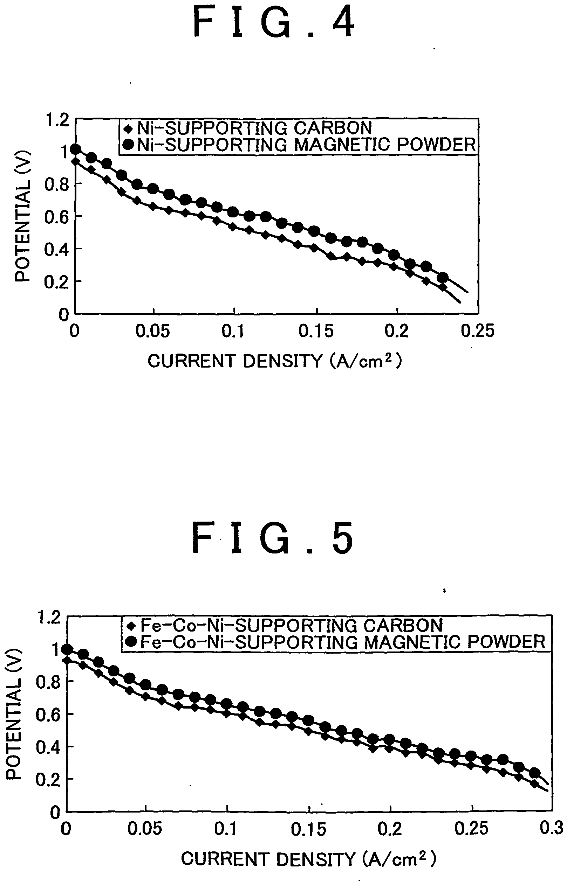

FIG 4 is a diagram comparing the I-V characteristics of a cell employing a cathode electrode in which the Ni catalyst was supported on a carbon powder and a cell employing a cathode electrode in which the Ni catalyst was supported on a magnetic powder. In FIG 4, the horizontal axis represents the current density [A/cm²], and the vertical axis represents the voltage [V]. In FIG 4, the curve plotted with squares represents the fuel cell in accordance with a comparative example, and the curve plotted with solid circles represent the fuel cell in accordance with the first embodiment. From FIG. 4, it is seen that the fuel cell of the first embodiment was higher in the voltage relative to the current density, and therefore was improved in power generation performance, in comparison with the fuel cell of the comparative example.

The first embodiment is described above in conjunction with the case where Ni is used for the catalyst particles 38. However, the invention is not limited so. Any other catalyst may also be used as long as it has a necessary function as the catalyst. Concretely, at least one metal selected from the group consisting of iron(Fe), cobalt(Co), nickel (Ni) and platinum(Pt) may be used for the catalyst particles.

For example, in the case catalyst particles of Fe-Co-Ni are used instead of the catalyst particles 38 of Ni, an electrode catalyst may be formed by preparing a Fe-acetate solution, a Co-acetate solution and a Ni-acetate solution instead of the Ni-acetate solution in step S104, and mixing the solutions, and mixing into the mixed solution the needle-shape bodies as a carrier, and then performing the filtration, the heat treatment, etc. In addition, the concentration of each of the Fe-acetate solution, the Ni-acetate solution and the Co-acetate solution may be approximately in the range of 0.05 [mol/l] to 10 [mol/l].

FIG 5 is a diagram comparing the I-V characteristics of a cell employing a cathode electrode in which the Fe-Co-Ni catalyst was supported on a carbon powder and a cell employing a cathode electrode in which the Fe-Co-Ni catalyst was supported on a magnetic powder. In FIG. 5, the horizontal axis represents the current density [A/cm²], and the vertical axis represents the voltage [V]. Besides, in FIG. 5, the curve plotted with squares represents the fuel cell in accordance with a comparative example, and the curve plotted with solid circles represent the fuel cell in accordance with a modification of the first embodiment. In addition, in these examples, too, the anode electrode 20 and the cathode electrode 30 employed the same electrode catalyst, that is, the electrode catalyst in which the catalyst particles of Fe-Co-Ni were supported on the alloy oxide 34 having magnetism.

From FIG 5, it may be seen that, in the case where catalyst particles of Fe-Co-Ni were supported on the alloy oxide 34 having magnetism, the voltage relative to the current density was higher and the power generation performance was improved, in comparison with the case where the catalyst particles of Fe-Co-Ni were supported merely on carbon powder.

Furthermore, it may be understood that, in the case where the catalyst particles of Fe-Co-Ni were employed, higher catalyst-performance was exhibited than in the case where the catalyst particles of Ni were employed. A reason for this is considered to be that, in the case where the catalyst particles of Fe-Co-Ni were employed, the catalyst particles of Fe-Co-Ni in the anode electrode 20 have the effect of breaking C-C bonds. That is, it is considered that in the case where the anode electrode 20 side is supplied with ethanol as a fuel, the C-C bonds of the fuel are efficiently broken in the fuel electrode side, so that hydrogen ions may be quickly produced from the fuel.

Furthermore, the first embodiment is described above in conjunction with the case where the anode electrode 20 and the cathode electrode 30 are constructed of identical electrode catalyst layers. However, in the invention, the construction of the catalyst layer of the anode electrode 20 does not altogether need to be the same as that of the cathode electrode 30. For example, in the catalyst layer of the anode electrode 20, the carriers on which catalysts are supported may also be supports that do not have magnetism. Examples of the construction materials of the anode electrode catalyst layer include materials constructed of Fe, CO, Ni, Pt, or the like, materials in which one or more of these metals are supported on carriers made of carbon or the like, organic metal complexes whose center metals are any one or more of these metals, materials in which any of such organic metal complexes is supported on carriers, etc. Besides, a diffusion layer constructed of a porous material or the like may be disposed on a surface of each electrode catalyst layer.

Besides, the first embodiment uses, as the carrier in the catalyst-supported units in the cathode electrode catalyst layer 32, needle-shape bodies in which the alloy oxide 34 whose main component is iron is coated with the carbon coat 36 and is magnetized. However, in the invention, the carrier is not limited so. In the invention, any other carrier may also be used as the carrier on which catalysts are supported in the cathode electrode catalyst layer 32 as long as the carrier is able to support the catalyst particles 38, has magnetism and has a needle-like shape having an aspect ratio in the range of 10 to 100. The carrier is described above in conjunction with the case where the carrier is a needle-shape body whose aspect ratio is in the range of 10 to 100. The adoption of this shape of the carrier may increase the reaction surface of the catalyst, and therefore may improve the power generation performance.

Furthermore, the first embodiment is described above in conjunction with the case where the intensity of the gradient magnetic field [dH/dx] for magnetizing the alloy oxide 34 as a carrier is 0.05 [T] or greater. The magnetization in a magnetic field whose intensity is within this range is effective in order to effectively attract oxygen in the atmospheric air to the electrode catalyst. However, the invention is not limited so. Concretely, the magnetic material may also be a material that is magnetized in a gradient magnetic field [dH/dx] of 0.01 [T] or greater. The intensity of the magnetic field for the magnetization is not limited to this range, but may also be within an even smaller range.

Furthermore, although the first embodiment is described above in conjunction with an example of the formation method for the cathode electrode catalyst layer 32, the cathode electrode catalyst layer 32 is not limited to the layer formed according to the above-described formation method, but may also be a layer formed by a different method in the invention. Therefore, none of the concentration of the acetic acid solution used in the formation method, the temperature of the heat treatment, etc. limits the invention.

Furthermore, the first embodiment is described above in conjunction with the case where ethanol is used as a fuel. That is because ethanol is available at a relatively low cost, and allows efficient electric power generation. However, the fuel in the invention is not limited to ethanol. As described above in conjunction with the first embodiment, the conceivable fuels for use in the case the anion exchange membrane 10 are used as an ion exchange membrane are, for example, methane, ammonia, etc., besides ethanol.

The fuel cell in the second embodiment has the same structure as the fuel cell of the first embodiment, except that the catalyst particles are different from those used in the fuel cell of the first embodiment. Concretely, in the fuel cell of the second embodiment, the carriers on which catalysts are supported constituting the cathode electrode catalyst layer 32 is a carrier obtained by magnetizing a pulverized oxide of an Fe-Co alloy. The mixture ratio of Co in the alloy oxide is appropriately in the range of 5 to 30%. As in the first embodiment, the alloy oxide is magnetized in a gradient magnetic field [dH/dx] of 0.05 [T] or greater, and therefore has magnetism. Platinum (Pt) is used for the catalyst particles.

Even in the case where an oxide of a Fe-Co alloy is magnetized, the magnetism is also able to attract oxygen in the atmospheric air to the cathode electrode 30. Therefore, the concentration overvoltage at the cathode electrode 30 side may be reduced, and the power generation performance of the fuel cell may be effectively improved.

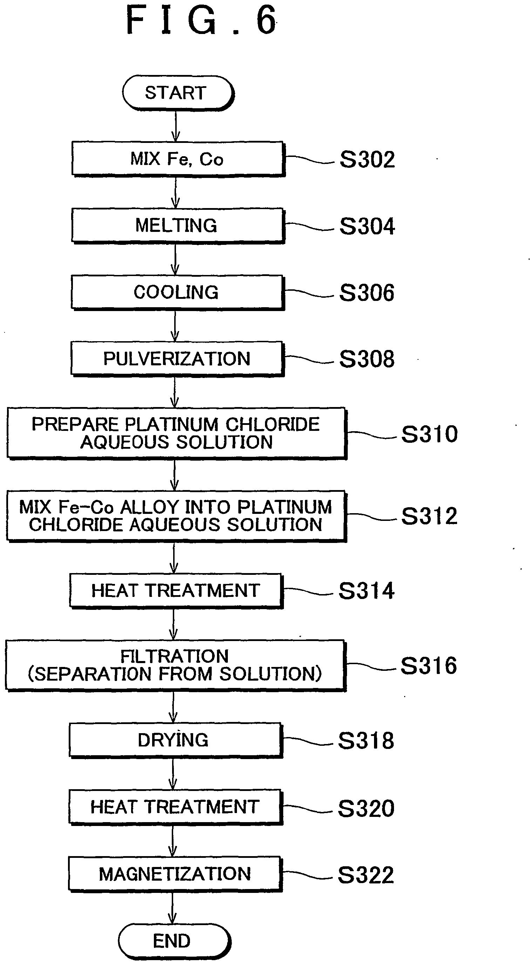

FIG. 6 is a diagram for describing a formation method for an electrode catalyst of a fuel cell in the second embodiment of the invention. The method shown in FIG. 6 has the same processes as the method of FIG 3, except that the method of FIG. 6 has a process of steps S302 to S314 instead of the process of step S102 to S106 prior to step S108 in FIG. 3.

Concretely, in the method shown in FIG 6, firstly Fe and Co are mixed (S302). In this step, the mixture ratio of Co to the total amount of Fe and Co is approximately in the range of 5 to 30%. Next, Fe and Co are melted, and then are cooled (S304, S306). This produces an oxide of an alloy of Fe and Co. Next, the produced alloy oxide is pulverized to a size of 1 [µm] to 0.1 [µm] (S308). In the second embodiment, this pulverized alloy oxide is used as a carrier in the cathode electrode catalyst layer 32.

In step S310 in FIG 6, a platinum chloride aqueous solution is prepared. The concentration of the platinum chloride aqueous solution is approximately in the range of 0.005 [mol/l] to 10 [mol/l]. The alloy oxide formed in step S308 is mixed into the platinum chloride aqueous solution (S312). After that, the mixture liquid is heated. This precipitates Pt, resulting in a state in which Pt is fixed to the alloy oxide.

After that, filtration, desiccation and heat treatment are performed as in steps S108 to S114 in FIG. 3 (S316 to S322). This results in formation of catalyst-supported units in which catalyst particles of Pt are supported on the alloy oxide. After that, the alloy oxide of the catalyst-supported units is magnetized (S322). The catalyst-supported units formed as described above are mixed into a solution containing the same components as the anion exchange membrane 10, and the mixture is applied to the surface of the anion exchange membrane 10. Thus, a cathode electrode catalyst layer is formed.

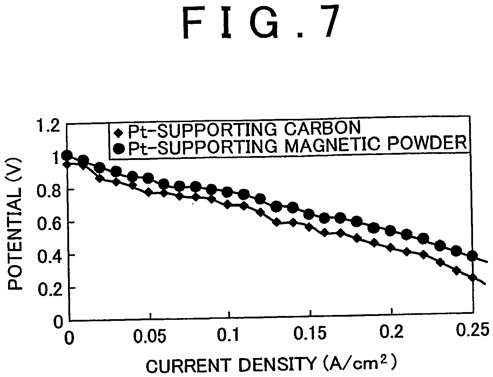

FIG. 7 is a diagram for describing the relationships between the current density and the voltage with regard to a fuel cell having a cathode electrode catalyst layer of the second embodiment and a fuel cell of a comparative example. FIG 7 is a diagram comparing the I-V characteristics of a cell employing a cathode electrode in which the Pt catalyst was supported on a carbon powder and a cell employing a cathode electrode in which the Pt catalyst was supported on a magnetic powder. In FIG. 7, the horizontal axis represents the current density [A/cm²] , and the vertical axis represents the voltage [V]. Besides, in FIG. 7, the curve plotted with squares represents the current density-voltage relationship of the fuel cell of the comparative example, and the curve plotted with solid circles represents the current density-voltage relationship of the fuel cell of the second embodiment. From FIG. 7, it may be seen that, in the fuel cell of the second embodiment in which Pt is supported on a carrier made of a magnetic alloy oxide, the voltage relative to the current density is higher and the power generation performance is improved in comparison with the fuel cell of the comparative example.

The second embodiment is described above in conjunction with the case where catalyst particles of Pt are supported. However, the catalyst particles in the invention are not limited to particles of Pt, but may also be of Ni, or an Fe-Co-Ni alloy, or the like, as described above in conjunction with the first embodiment. In the fuel cell in the invention, the electric power generation reaction is conducted in an alkaline environment. Therefore, even if such a metal as Ni, Fe or the like is used as an electrode catalyst, corrosion of the metal does not occur. Furthermore, the use of Ni and Fe allows manufacture of a catalyst at low cost, and therefore allows a cost reduction of the fuel cell, in comparison with the case where Pt is used.

Furthermore, in the second embodiment, in the case where a Fe-Co-Ni alloy is used for the catalyst particles, the use of substantially the same electrode as the anode electrode will achieve the efficient breaking of C-C bonds, and will heighten the fuel utilization rate. Thus, the power generation performance may be further improved.

Furthermore, the second embodiment is described above in conjunction with the case where an alloy of Fe and Co is used as a carrier. However, the alloy oxide is not limited so, but may also be a pulverized product of another metal oxide that may be magnetized.

According to the invention, due to the magnetization, the oxygen in the supplied reactant gas may be attracted to the electrode catalyst. Therefore, the catalyst function of the electrode catalyst may be heightened.

Furthermore, in the case where the magnetic material is a metal oxide containing iron or a metal oxide containing iron and cobalt, the electrode catalyst may be reliably made to have magnetism, and the catalyst function may be heightened.

Furthermore, in the case where the magnetic material has a needle-shape body whose aspect ratio is in the range of 10 to 100, the reaction surface of the electrode catalyst may be increased, and therefore the power generation performance may be improved.

Furthermore, in the case where the catalyst particles are particles made of at least one metal of the group consisting of iron, cobalt, nickel and platinum, the catalyst function of the electrode catalyst may be reliably obtained. Besides, the use of the catalyst particles of nickel, cobalt or iron may provide an electrode catalyst at a further reduced cost.

Furthermore, in the case where the catalyst particles are particles made of iron, cobalt and nickel, C-C bonds may be more effectively broken. Therefore, even in the case where the catalyst particles are used as the electrode catalyst in the anode electrode side, the reaction on the electrode catalyst may be accelerated, so that the catalyst function may be improved.

In the case where the electrode catalyst in accordance with the invention is used as the electrode catalyst in the cathode electrode side, the reaction rate of oxygen in the cathode electrode in particular may be raised, so that a fuel cell with even higher power generation performance may be obtained.

Furthermore, in the case where the electrode catalyst for an alkaline fuel cell is formed by magnetizing the metal oxide after catalyst particles are supported on the metal oxide, an electrode catalyst whose catalyst function is heightened by magnetizing the metal oxide may be obtained.

Furthermore, in the case where the metal oxide is magnetized in a gradient magnetic field of 0.01 [T] or greater or of 0.05 [T] or greater, the electrode catalyst may be reliably provided with magnetism of a needed intensity, and therefore an electrode catalyst with a high catalyst function may be obtained.

If in the embodiment of the invention, numerical values regarding the number of pieces or the like, the quantity, the amount, the range, etc., of any of the component elements of the foregoing embodiments or the like are referred to, the numerical values are not restrictive, except for the case where a numerical value is particularly explicitly presented, or is specifically determined with theoretical clearness. Besides, the structures, the steps in the method, etc., described with the embodiments are not necessarily essential to the invention, except for the case where a structure, a step, or the like is particularly explicitly presented, or is specifically determined with theoretical clearness.

## Claims

1. An alkaline fuel cell comprising an electrode catalyst (32) for an alkaline fuel cell, comprising:
a magnetic material (34) provided as a carrier that has magnetism; and
catalyst particles (38) supported on the magnetic material (34),
wherein the magnetic material (34) has a narrow long needle-like shape having an aspect ratio in a range of 10 to 100.

2. The alkaline fuel cell according to claim 1, wherein the magnetic material (34) is an oxide of an alloy, or
wherein the magnetic material (34) is an oxide of metal that contains iron.

3. The alkaline fuel cell according to claim 1 or 2,
wherein the magnetic material (34) is an oxide of metal that contains iron and cobalt, and
wherein, optionally, a mixture ratio of cobalt to a total amount of iron and cobalt in the oxide of metal is in a range of 5 to 30%.

4. The alkaline fuel cell according to any one of claims 1 to 3, wherein the magnetic material (34) is disposed toward the electrode so that a length direction of the magnetic material (34) is perpendicular to the contact surface between an electrolyte (10) and an electrode.

5. The alkaline fuel cell according to any one of claims 1 to 4, wherein the catalyst particles (38) are particles made up of at least one metal selected from a group consisting of iron, cobalt, nickel and platinum.

6. The alkaline fuel cell according to claim 5, wherein the catalyst particles (38) are particles made up of iron, cobalt and nickel, or
wherein the catalyst particles (38) are particles made up of nickel.

7. The alkaline fuel cell according to any of claims 1 to 6 further comprising:
an electrolyte (10) through which a negative ion is allowed to permeate;
an anode electrode (20) disposed on one side of the electrolyte (10); and
a cathode electrode (30) disposed on the other side of the electrolyte (10),
wherein the electrode catalyst (32) is used in the cathode electrode (30).

8. The alkaline fuel cell according to claim 7, wherein the the electrode catalyst (32) is used in the anode electrode (20).

9. A formation method for the alkaline fuel cell comprising an electrode catalyst (32) according to any one of claims 1 to 6, comprising:
attaching an ion of a catalyst metal component to a metal oxide by immersing the metal oxide in a solution containing the ion of the catalyst metal component;
separating the metal oxide from the solution;
heating the metal oxide; and
magnetizing the metal oxide after supporting the catalyst metal component on the metal oxide.

10. A formation method for the alkaline fuel cell comprising an electrode catalyst (32) according to any one of claims 1 to 6, comprising:
pulverizing alloy oxide;
mixing the pulverized alloy oxide with a solution
containing an ion of a catalyst metal component;
heating a mixture of the solution and the pulverized alloy oxide;
separating the metal oxide from the mixture of the solution and the pulverized alloy oxide;
heating the metal oxide; and
magnetizing the metal oxide after supporting the catalyst metal component on the metal oxide.

11. The formation method according to claim 9 or 10,
wherein the metal oxide contains iron, and/or
wherein the metal oxide contains iron and cobalt, and/or
wherein the metal oxide has a narrow long needle-like shape having an aspect ratio in a range of 10 to 100.

12. The formation method according to any one of claims 9 to 11, wherein catalyst particles (38) are particles made up of at least one metal selected from a group consisting of iron, cobalt, nickel and platinum.

13. The formation method according to claim 12, wherein the catalyst particles (38) are particles made up of iron, cobalt and nickel, and
wherein, optionally, the solution containing the ion of the catalyst metal component is obtained by mixing a solution of iron, a solution of cobalt and a solution of nickel whose concentrations are equal.

14. The formation method according to any one of claims 9 to 13, wherein the metal oxide is magnetized in a gradient magnetic field of at least 0.01 [T] or greater.

15. The formation method according to claim 14, wherein the metal oxide is magnetized in a gradient magnetic field of at least 0.05 [T] or greater.

## Patentansprüche

1. Alkalische Brennstoffzelle, die einen Elektrodenkatalysator (32) für eine alkalische Brennstoffzelle umfasst, umfassend:
ein magnetisches Material (34), das als ein Träger bereitgestellt ist, das Magnetismus aufweist; und
Katalysatorteilchen (38), die auf dem magnetischen Material (34) geträgert sind,
wobei das magnetische Material (34) eine schmale, lange, nadelartige Form mit einem Seitenverhältnis in einem Bereich von 10 bis 100 aufweist.

2. Alkalische Brennstoffzelle nach Anspruch 1, wobei das magnetische Material (34) ein Oxid einer Legierung ist, oder
wobei das magnetische Material (34) ein Oxid eines Metalls, das Eisen enthält, ist.

3. Alkalische Brennstoffzelle nach Anspruch 1 oder 2,
wobei das magnetische Material (34) ein Oxid eines Metalls, das Eisen und Kobalt enthält, ist, und
wobei, optional, ein Mischungsverhältnis von Kobalt zu einer Gesamtmenge von Eisen und Kobalt in dem Oxid eines Metalls in einem Bereich von 5 bis 30% liegt.

4. Alkalische Brennstoffzelle nach einem der Ansprüche 1 bis 3, wobei das magnetische Material (34) in Richtung der Elektrode so angeordnet ist, dass eine Längenrichtung des magnetischen Materials (34) rechtwinklig zu der Kontaktoberfläche zwischen einem Elektrolyten (10) und einer Elektrode ist.

5. Alkalische Brennstoffzelle nach einem der Ansprüche 1 bis 4, wobei die Katalysatorteilchen (38) Teilchen sind, die aus zumindest einem Metall ausgewählt aus der Gruppe bestehend aus Eisen, Kobalt, Nickel und Platin aufgebaut sind.

6. Alkalische Brennstoffzelle nach Anspruch 5, wobei die Katalysatorteilchen (38) Teilchen sind, die aus Eisen, Kobalt und Nickel aufgebaut sind, oder
wobei die Katalysatorteilchen (38) aus Nickel aufgebaute Teilchen sind.

7. Alkalische Brennstoffzelle nach einem der Ansprüche 1 bis 6, die ferner umfasst:
einen Elektrolyt (10), durch welchen ein negatives Ion durchtreten kann;
eine Anodenelektrode (20), die auf einer Seite des Elektrolyten (10) angeordnet ist; und
eine Kathodenelektrode (30), die auf der anderen Seite des Elektrolyten (10) angeordnet ist,
wobei der Elektrodenkatalysator (32) in der Kathodenelektrode (30) verwendet ist.

8. Alkalische Brennstoffzelle nach Anspruch 7, wobei der Elektrodenkatalysator (32) in der Anodenelektrode (20) verwendet ist.

9. Bildungsverfahren für die alkalische Brennstoffzelle, die einen Elektrodenkatalysator (32) nach einem der Ansprüche 1 bis 6 umfasst, umfassend:
Anbringen eines Ions eines Katalysatormetallbestandteils an ein Metalloxid durch Eintauchen des Metalloxids in eine Lösung, die das Ion des Katalysatormetallbestandteils enthält;
Trennen des Metalloxids von der Lösung;
Erwärmen des Metalloxids; und
Magnetisieren des Metalloxids nach Trägern des Katalysatormetallbestandteils auf dem Metalloxid.

10. Herstellungsverfahren für die alkalische Brennstoffzelle, die einen Elektrodenkatalysator (32) nach einem der Ansprüche 1 bis 6 umfasst, umfassend:
Pulverisieren eines Legierungsoxids;
Mischen des pulversierten Legierungsoxids mit einer Lösung, die ein Ion eines Katalysatormetallbestandteils enthält;
Erwärmen einer Mischung der Lösung und des pulverisierten Legierungsoxids;
Trennen des Metalloxids von der Mischung der Lösung und dem pulverisierten Legierungsoxid;
Erwärmen des Metalloxids; und
Magnetisieren des Metalloxids nach Trägern des Katalysatormetallbestandteils auf dem Metalloxid.

11. Bildungsverfahren nach Anspruch 9 oder 10, wobei das Metalloxid Eisen enthält; und/oder
wobei das Metalloxid Eisen und Kobalt enthält, und/oder
wobei das Metalloxid eine schmale, lange, nadelartige Form mit einem Seitenverhältnis in einem Bereich von 10 bis 100 aufweist.

12. Bildungsverfahren nach einem der Ansprüche 9 bis 11, wobei Katalysatorteilchen (38) Teilchen sind, die aus zumindest einem Metall ausgewählt aus der Gruppe bestehend aus Eisen, Kobalt, Nickel und Platin aufgebaut sind.

13. Bildungsverfahren nach Anspruch 12, wobei die Katalysatorteilchen (38) Teilchen sind, die aus Eisen, Kobalt und Nickel aufgebaut sind, und
wobei, optional, die Lösung, die das Ion des Katalysatormetallbestandteils enthält, durch Mischen einer Lösung von Eisen, einer Lösung von Kobalt und einer Lösung von Nickel, deren Konzentrationen gleich sind, erhalten ist.

14. Bildungsverfahren nach einem der Ansprüche 9 bis 13, wobei das Metalloxid in einem Gradientenmagnetfeld von zumindest 0,01 [T] oder größer magnetisiert wird.

15. Bildungsverfahren nach Anspruch 14, wobei das Metalloxid in einem Gradientenmagnetfeld von zumindest 0,05 [T] oder größer magnetisiert wird.

## Revendications

1. Pile à combustible alcaline comprenant un catalyseur d'électrode (32) pour une pile à combustible alcaline, comprenant :
un matériau magnétique (34) prévu comme un support qui a un magnétisme ; et
des particules de catalyseur (38) supportées sur le matériau magnétique (34),
dans laquelle le matériau magnétique (34) a une forme étroite, longue, de type aiguille ayant un rapport longueur/largeur dans une plage de 10 à 100.

2. Pile à combustible alcaline selon la revendication 1, dans laquelle le matériau magnétique (34) est un oxyde d'un alliage, ou
dans laquelle le matériau magnétique (34) est un oxyde de métal qui contient du fer.

3. Pile à combustible alcaline selon la revendication 1 ou 2,
dans laquelle le matériau magnétique (34) est un oxyde de métal qui contient du fer et du cobalt, et
dans laquelle, facultativement, un rapport de mélange du cobalt sur une quantité totale de fer et de cobalt dans l'oxyde de métal est dans une plage de 5 à 30%.

4. Pile à combustible alcaline selon l'une quelconque des revendications 1 à 3, dans laquelle le matériau magnétique (34) est disposé vers l'électrode de telle sorte qu'un sens de la longueur du matériau magnétique (34) est perpendiculaire à la surface de contact entre un électrolyte (10) et une électrode.

5. Pile à combustible alcaline selon l'une quelconque des revendications 1 à 4, dans laquelle les particules de catalyseur (38) sont des particules constituées d'au moins un métal choisi parmi un groupe consistant en le fer, le cobalt, le nickel et le platine.

6. Pile à combustible alcaline selon la revendication 5, dans laquelle les particules de catalyseur (38) sont des particules constituées de fer, de cobalt et de nickel, ou
dans laquelle les particules de catalyseur (38) sont des particules constituées de nickel.

7. Pile à combustible alcaline selon l'une quelconque des revendications 1 à 6 comprenant en outre :
un électrolyte (10) à travers lequel un ion négatif est laissé perméer ;
une électrode d'anode (20) disposée sur un côté de l'électrolyte (10) ; et
une électrode de cathode (30) disposée sur l'autre côté de l'électrolyte (10),
dans laquelle le catalyseur d'électrode (32) est utilisé dans l'électrode de cathode (30).

8. Pile à combustible alcaline selon la revendication 7, dans laquelle le catalyseur d'électrode (32) est utilisé dans l'électrode d'anode (20).

9. Procédé de formation pour la pile à combustible alcaline comprenant un catalyseur d'électrode (32) selon l'une quelconque des revendications 1 à 6, comprenant :
la fixation d'un ion d'un composant métallique catalyseur sur un oxyde de métal en immergeant l'oxyde de métal dans une solution contenant l'ion du composant métallique catalyseur ;
la séparation de l'oxyde de métal de la solution ;
le chauffage de l'oxyde de métal ; et
la magnétisation de l'oxyde de métal après le dépôt du composant métallique catalyseur sur l'oxyde de métal.

10. Procédé de formation pour la pile à combustible alcaline comprenant un catalyseur d'électrode (32) selon l'une quelconque des revendications 1 à 6, comprenant :
la pulvérisation d'un oxyde d'alliage ;
le mélange de l'oxyde d'alliage pulvérisé avec une solution contenant un ion d'un composant métallique catalyseur ;
le chauffage d'un mélange de la solution et de l'oxyde d'alliage pulvérisé ;
la séparation de l'oxyde de métal du mélange de la solution et de l'oxyde d'alliage pulvérisé ;
le chauffage de l'oxyde de métal ; et
la magnétisation de l'oxyde de métal après le dépôt du composant métallique catalyseur sur l'oxyde de métal.

11. Procédé de formation selon la revendication 9 ou 10, dans lequel l'oxyde de métal contient du fer, et/ou
l'oxyde de métal contient du fer et du cobalt, et/ou
l'oxyde de métal a une forme étroite, longue, de type aiguille ayant un rapport longueur/largeur dans une plage de 10 à 100.

12. Procédé de formation selon l'une quelconque des revendications 9 à 11, dans lequel les particules de catalyseur (38) sont des particules constituées d'au moins un métal choisi parmi un groupe consistant en le fer, le cobalt, le nickel et le platine.

13. Procédé de formation selon la revendication 12, dans lequel les particules de catalyseur (38) sont des particules constituées de fer, de cobalt et de nickel, et
dans lequel, facultativement, la solution contenant l'ion du composant métallique catalyseur est obtenue en mélangeant une solution de fer, une solution de cobalt et une solution de nickel dont les concentrations sont égales.

14. Procédé de formation selon l'une quelconque des revendications 9 à 13, dans lequel l'oxyde de métal est magnétisé dans un champ magnétique à gradient d'au moins 0,01 [T] ou plus.

15. Procédé de formation selon la revendication 14, dans lequel l'oxyde de métal est magnétisé dans un champ magnétique à gradient d'au moins 0,05 [T] ou plus.
